# EUROPEAN PATENT APPLICATION

(11) **EP 3 226 401 A1**
(43) Date of publication of application: **04.10.2017**
(21) Application number: 15863322.2
(22) Date of filing: 29.09.2015
(51) Int. Cl.: H02P 6/16

(54) **MOTOR DRIVE DEVICE**

(30) Priority: 26.11.2014 JP 2014238801; 25.08.2015 JP 2015166046
(71) Applicant: Sanken Electric Co., Ltd., Niiza-shi, Saitama 352-8666 (JP)
(72) Inventor: SUZUKI, Mio, Niiza-shi Saitama 352-8666 (JP); TAKAMORI, Yasuyuki, Niiza-shi Saitama 352-8666 (JP)
(74) Representative: Reitstötter Kinzebach
(86) International application number: PCT/JP2015/004959
(87) International publication number: WO 2016/084295

(57) **Abstract**

Provided is a motor drive device capable of suppressing degradation in motor efficiency even when the Hall element is driven intermittently.

The motor drive device includes: an internal regulator (13) configured to intermittently output a drive voltage to the Hall elements (2U, 2V, and 2W) to intermittently drive the Hall elements; a drive circuit (11) which generates and outputs an applied voltage to be applied to drive windings (LU, LV, and LW) of a 3-phase brushless DC motor (M); Hall amplifiers (AmpU, AmpV, and AmpW) which detect a zero-cross detection timing at which zero-cross of the Hall voltage output from the Hall elements (2U, 2V, and 2W) is detected and generate Hall signals (HU, HV, and HW); a rotation control unit (12) for driving the drive circuit (11); and an advance angle value generation unit (16) for generating an advance angle value taking account of the delay of the zero-cross detection timing caused by the intermittent driving of the Hall elements (2U, 2V, and 2W). The rotation control unit (12) advances the phase of the applied voltage based on the advance angle value generated by the advance angle value generation unit (16).

## Description

### TECHNICAL FIELD

The present invention relates to a motor drive device which drives a brushless DC motor.

### BACKGROUND ART

In recent years, a brushless DC motor used as a fan motor for air conditioners, air purifiers and the like is desired not only to reduce the power consumption due to an inverter driving system, but also to reduce the power consumption of the motor drive device that drives the brushless DC motor. About 70% of the current consumption of the control power supply of the motor drive device is used for driving the Hall element in the normal operation. Therefore, a technique, in which the power supply for the Hall element intermittently drives at a cycle sufficiently shorter than the zero-cross cycle of the Hall voltage to reduce the current consumption, has been proposed (for example, see Patent Literature 1).

### Citation List

### [Patent Literature]

[Patent Literature 1]: JP-A-S63-39486

### SUMMARY OF THE INVENTION

### Technical Problem

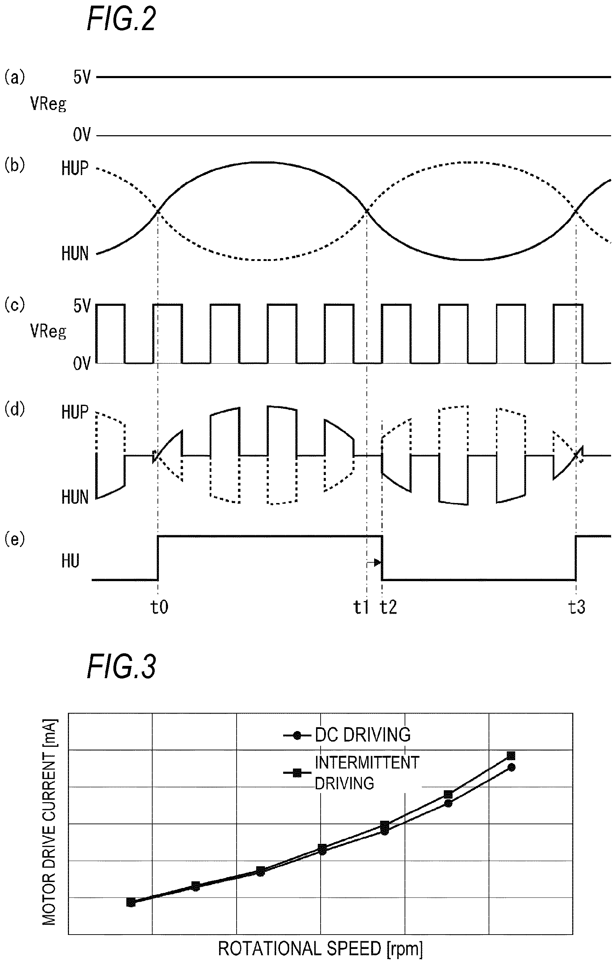

However, as in the prior art, when the power supply for the Hall element is intermittently driven, there was a problem of degradation of the motor efficiency. FIG. 3 is a graph in which the motor efficiency in a case where the power supply for the Hall element is DC-driven is compared with the motor efficiency in a case where the power supply for the Hall element is intermittently driven, and the vertical axis represents the motor drive current [mA], and the horizontal axis represents the rotational speed [rpm]. According to FIG. 3, when the power supply for the Hall element is intermittently driven, it is understood that the motor drive current increases and the motor efficiency is degraded as compared with the case where the Hall element power supply is DC-driven. The degradation of the motor efficiency becomes more notable as the rotational speed becomes larger.

In view of the above problem, an object of the present invention is to provide a motor drive device capable of suppressing degradation of motor efficiency even when a Hall element is driven intermittently.

In order to achieve the above object, a motor drive device according to the present invention is configured as follows.

A motor drive device according to the present invention drives a brushless DC motor in which a Hall sensor configured to detect magnetic poles of a rotor and output a pair of Hall voltages having opposite polarities is disposed as a position detection unit detecting the position of the rotor, and the motor drive device includes: a Hall sensor power supply, which is configured to intermittently output a drive voltage to the Hall sensors to intermittently drive the Hall sensor; a drive circuit, which generates and outputs an applied voltage to be applied to drive windings of the brushless DC motor; a Hall amplifier, which detects a zero-cross detection timing at which zero-cross of the Hall voltage output from the Hall sensor is detected; a rotation control unit, which grasps the rotational position of the rotor to drive the drive circuit based on a Hall signal generated by the Hall amplifier; and an advance angle value generation unit, which generates an advance angle value taking account of the delay of the zero-cross detection timing caused by the intermittent driving of the Hall sensor, wherein the rotation control unit corrects the phase of the applied voltage output from the drive circuit, based on the advance angle value generated by the advance angle value generation unit.

Further, a motor drive device according to the present invention drives a brushless DC motor in which a Hall sensor configured to detect magnetic poles of a rotor and output a pair of Hall voltages having opposite polarities is disposed as a position detection unit detecting the position of the rotor, and the motor drive device includes: a Hall sensor power supply configured to intermittently output a drive voltage to the Hall sensors to intermittently drive the Hall sensor; a drive circuit which generates and outputs an applied voltage to be applied to drive windings of the brushless DC motor; a Hall amplifier which detects a zero-cross detection timing at which zero-cross of the Hall voltage output from the Hall sensor is detected; a rotation control unit which grasps the rotational position of the rotor to drive the drive circuit based on a Hall signal generated by the Hall amplifier; an electric angle prediction unit which predicts a zero-cross timing of the input Hall voltage; and an advance angle value generation unit which generates an advance angle value taking account of the delay of the zero-cross detection timing caused by the intermittent driving of the Hall sensor, wherein the Hall sensor power supply increases a duty ratio, by which the drive voltage is intermittently output, during a zero-cross preceding period from before the zero-cross of the Hall voltage until the zero-cross is detected, as compared with a period other than the zero-cross preceding period, based on the prediction result of the electric angle prediction unit, the advance angle value generation unit generates the advance angle value taking into consideration of the delay of the zero-cross detection timing caused by the intermittent driving of the Hall sensor in the zero-cross preceding period, and the rotation control unit corrects the phase of the applied voltage output from the drive circuit, based on the advance angle value generated by the advance angle value generation unit.

### Advantageous Effects of the Invention

According to the present invention, since the advance angle delay caused by the delay in the zero-cross detection timing due to the intermittent driving of the Hall element can be corrected by the advance angle control, there is an effect capable of suppressing degradation of the motor efficiency caused by the delay in the zero-cross detection timing due to the intermittent driving of the Hall element.

### BRIEF DESCRIPTION OF THE DRAWINGS

FIG. 1 is a block diagram illustrating a configuration of a motor drive device according to a first embodiment of the present invention.
FIG. 2 is a waveform chart illustrating delay of a Hall signal during the intermittent driving.
FIG. 3 is a diagram illustrating degradation in motor efficiency due to intermittent driving of a Hall element.
FIG. 4 is block diagram illustrating a configuration of a motor drive device according to a second embodiment of the present invention.
FIG. 5 is a waveform chart illustrating an example of a drive switching signal output from an electric angle prediction unit illustrated in FIG. 4.
FIG. 6 is a waveform chart illustrating an example of switching a duty ratio according to the drive switching signal illustrated in FIG. 5.
FIG. 7 is a waveform chart illustrating an example of switching the duty ratio according to the drive switching signal illustrated in FIG. 5.
FIG. 8 is a waveform chart illustrating an example of switching drive voltages by the drive switching signal illustrated in FIG. 5.

### DESCRIPTION OF EMBODIMENTS

Next, embodiments of the present invention will be described in detail with reference to the drawings. In each drawing, the same components are denoted by the same reference numerals, and a part thereof will not be provided.

### Example 1

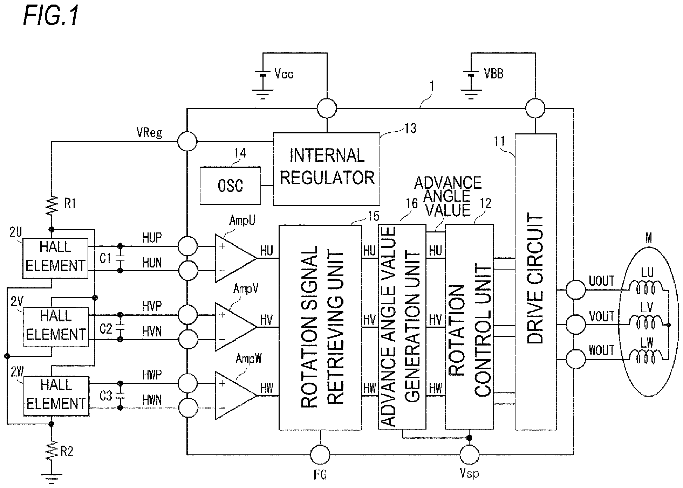

Referring to FIG. 1, a motor drive device 1 of a first embodiment includes a drive circuit 11, a rotation control unit 12, an internal regulator 13, an oscillator (OSC) 14, Hall amplifiers AmpU, AmpV, and AmpW, a rotation signal retrieving unit 15, and an advance angle value prediction unit 16.

The drive circuit 11 obtains electric power supplied from the main power source VBB and generates and outputs applied voltages UOUT, VOUT, and WOUT which are applied to drive windings LU, LV, and LW of a 3-phase brushless DC motor M, respectively. The drive circuit 11 is made up of, for example, six N-channel MOS-FETs or IGBTs connected in a totem-pole manner.

The rotation control unit 12 grasps the rotational position of the rotor based on the Hall signals HU, HV, and HW, which are input, and generates a drive signal for driving the drive circuit 11 based on a control signal Vsp input from an external control unit (for example, six PWM signals for driving the six N-channel MOS-FETs of the drive circuit 11).

The internal regulator 13 obtains the electric power supplied from the control power source Vcc and supplies electric power to each part of the motor drive device 1. In addition, the internal regulator 13 generates and outputs a drive voltage VReg (for example, 5V) for driving the Hall elements 2U, 2V, and 2W, which are attached to the 3-phase brushless DC motor M at every electric angle of 120 degrees for example, and functions as a Hall sensor power supply. The Hall elements 2U, 2V, and 2W are position detection units for detecting the position of the rotor of the 3-phase brushless DC motor M, and are Hall sensors which detect the magnetic poles of the rotor and output a pair of Hall voltages having opposite polarity. The Hall voltages output from the Hall elements 2U, 2V, and 2W are zero-crossed at every electric angle of 180 degrees with centering the voltage dividing based on the resistors R1 and R2, according to rotations of the 3-phase brushless DC motor M.

The internal regulator 13 performs an intermittent driving, in which the drive voltage VReg is intermittently output at a cycle sufficiently shorter than the zero-cross cycle of the Hall voltage based on a pulse signal output from the oscillator (OSC) 14. Further, between the output terminal of the drive voltage VReg and the ground terminal, the resistor R1, the Hall elements 2U, 2V, and 2W connected in parallel, and the resistor R2 are connected.

The hall voltages HUP and HUN output from the Hall element 2U are input to the Hall amplifier AmpU, the Hall voltages HVP and HVN output from the Hall element 2V are input to the Hall amplifier AmpV, and the Hall voltages HWP and HWN output from the Hall element 2W are input to the Hall amplifier AmpW, respectively.

The Hall amplifier AmpU compares the two input Hall voltages HUP and HUN, and when the Hall voltage HUP becomes higher than the Hall voltage HUN, the Hall signal HU to be output is switched from low level to high level, and when the Hall voltage HUP becomes equal to or lower than the Hall voltage HUN, the Hall signal HU to be output is switched from high level to low level. The Hall amplifiers AmpV and AmpW operate similarly to the Hall amplifier AmpU, and output a Hall signal HV and a Hall signal HW, respectively.

Based on the input Hall signals HU, HV, and HW, the rotation signal retrieving unit 15 generates a rotation signal FG that switches between high level and low level at every electric angle of 60 degrees, for example, and outputs the generated rotation signal FG to an external control unit.

The advance angle value generation unit 16 generates an advance angle value based on the control signal Vsp input from the external control unit and outputs the advance angle value to the rotation control unit 12. Then, the rotation control unit 12 advances the winding current by advancing the phases of the applied voltages UOUT, VOUT, and WOUT based on the input advance angle value, and performs the advance angle correction for matching the phases of the induced voltage and the winding current. Further, the generation of the advance angle value in the advance angle value generation unit 16 may be performed based on the characteristics of the motor, the rotational speed, the load torque, an instruction from the outside, or the like, without being limited to the control signal Vsp.

In FIG. 2, (a) illustrates the drive voltage VReg during the DC driving, (b) illustrates the Hall voltages HUP and HUN during the DC driving, (c) illustrates the drive voltage VReg during the intermittent driving, (d) illustrates the Hall voltages HUP and HUN during the intermittent driving, and (e) illustrates the Hall signal HU during the intermittent driving, respectively. In FIG. 2, the frequency during the intermittent driving of the drive voltage VReg is illustrated to be smaller than the actual value for the sake of explanation. The period during the intermittent driving of the actual drive voltage VReg is, for example, 50 µs (frequency is 20 kHz), which is sufficiently shorter than the zero-cross cycle of the Hall voltages HUP and HUN. When the number of poles of the 3-phase brushless DC motor M is 8 and the rotational speed is 1000 rpm, the zero-cross cycle of the Hall voltages HUP and HUN is about 7.5 ms.

As illustrated in FIG. 2(a), during the DC driving in which a constant drive voltage VReg is applied to the Hall element 2U, the Hall voltages HUP and HUN are continuously output as illustrated in FIG. 2B. Thus, it is possible to accurately detect the zero-cross of the Hall voltages HUP and HUN at times t0, t1, and t3. Hereinafter, the timing at which the zero-cross of the Hall voltage is detected is referred to as zero-cross detection timing. In contrast, as illustrated in FIG. 2(c), when the drive voltage VReg applied to the Hall element 2U is driven intermittently as illustrated in FIG. 2(d), the Hall voltages HUP and HUN are output only in the period when the drive voltage VReg is applied to the Hall element 2U. Therefore, at the time t1, if the drive voltage VReg is not applied to the Hall element 2U, the zero-cross detection timing reaches the time t2 at which the drive voltage VReg is next applied. The delay in the zero-cross detection timing due to the intermittent driving of the Hall elements 2U, 2V, and 2W appears as a delayed advance angle for the 3-phase brushless DC motor M, resulting in degradation in motor efficiency.

Therefore, in the present embodiment, the advance angle value generation unit 16 is configured to generate an advance angle value taking account of the delay of the zero-cross detection timing due to the intermittent driving of the Hall elements 2U, 2V, and 2W. That is, the advance angle value generation unit 16 calculates a Hall-detection-delay advance angle correction value for correcting the advance angle delay caused by the delay of the zero-cross detection timing due to the intermittent driving of the Hall elements 2U, 2V, and 2W, adds the calculated Hall-detection-delay advance angle correction value to the advance angle value generated based on the control signal Vsp, and outputs the result.

A frequency Fa (cycle Ta = 1/Fa) for intermittently driving the Hall elements 2U, 2V, and 2W is set in advance in the advance angle value generation unit 16. The advance angle value generation unit 16 measures a time Tb of an electric angle of 1 degrees based on the input Hall signals HU, HV, and HW. The timing, at which the Hall signal HU, HV, and HW input to the advance angle value generation unit 16 switches between the high level and the low level, is the zero-cross detection timing at which the zero-cross of the Hall voltage is detected, and any of the Hall signals HU, HV, and HW switches between high level and low level, at every electric angle of 60 degrees. The advance angle value generation unit 16 can measure the time Tb corresponding to the electric angle of 1 degree, by measuring the time between the zero-cross detection timings (electric angle 60 degrees or 360 degrees) by the internal clock.

Further, the advance angle value generation unit 16 calculates the Hall-detection-delay advance angle correction value by dividing the time during which the drive voltage VReg is not applied (for example, 1/2 of the cycle Ta) by the time Tb. That is, the maximum value of the delay of the zero-cross detection timing due to the intermittent driving of the Hall elements 2U, 2V, and 2W is, for example, 1/2 of the cycle Ta. Therefore, the advance angle value generation unit 16 calculates the Hall-detection-delay advance angle correction value, based on the electric angle corresponding to the time when the drive voltage VReg becomes 0V, that is, the electric angle corresponding to 1/2 of the cycle Ta, which is the maximum value of the delay of the zero-cross detection timing. The delay of the zero-cross detection timing may be not 1/2 of the cycle Ta, and the delay is in the range from 0 to the cycle Ta. Additionally, the calculated Hall-detection-delay advance angle correction value may be multiplied by a coefficient k, which is set to less than 1 and output.

For example, when the motor rotational speed = 1000 rpm and the number of poles of the motor = 8 poles, the time Tb corresponding to the electric angle of 1 degree is about 41.6 µs. When the frequency Fa of the intermittent driving of the Hall is equal to 20 kHz (cycle Ta = 50 µs), the Hall-detection-delay advance angle correction value is 1.2 degree.

As described above, in the present embodiment, a motor drive device 1 which drives the 3-phase brushless DC motor M, in which Hall elements 2U, 2V, and 2W for detecting magnetic poles of a rotor and outputting a pair of Hall voltages having opposite polarities are disposed as a position detection unit detecting the position of the rotor, the motor drive device 1 includes: an internal regulator 13 which functions as a Hall sensor power supply, which intermittently outputs a drive voltage to the Hall elements 2U, 2V, and 2W to intermittently drive the Hall elements 2U, 2V, and 2W; a drive circuit 11 which generates and outputs an applied voltage to be applied to the drive windings LU, LV, and LW of the 3-phase brushless DC motor M; Hall amplifiers AmpU, AmpV, and AmpW which detect zero-cross detection timing at which zero-cross of the Hall voltage output from the Hall elements 2U, 2V, and 2W is detected; a rotation control unit 12 which grasps the rotational position of the rotor to drive the drive circuit 11 based on the Hall signals HU, HV, and HW; and an advance angle value generation unit 16 which generates the advance angle value taking account of the delay of the zero-cross detection timing caused by the intermittent driving of the Hall elements 2U, 2V, and 2W, and the rotation control unit 12 corrects the phase of the applied voltage output from the drive circuit 11 based on the advance angle value generated by the advance angle value generation unit 16. To correct the phase of the applied voltage, the phase may be advanced based on the advance angle value or the phase may be delayed based on the advance angle value.

According to this configuration, since the advance angle delay caused by the delay in the zero-cross detection timing due to the intermittent driving of the Hall elements 2U, 2V, and 2W can be corrected by the advance angle control, it is possible to suppress degradation of the motor efficiency caused by the delay of the zero-cross detection timing due to the intermittent driving of the Hall elements 2U, 2V, and 2W.

Furthermore, in the present embodiment, the advance angle value generation unit 16 calculates a Hall-detection-delay advance angle correction value for correcting the advance angle delay caused by the delay of the zero-cross detection timing, and generates an advance angle value to which the calculated Hall-detection-delay advance angle correction value is added.

According to this configuration, it is possible to correct the advance angle delay caused by the delay of the zero-cross detection timing as an object, by the calculated Hall-detection-delay advance angle correction value, and it is possible to more accurately perform the advance angle control.

Furthermore, in the present embodiment, the advance angle value generation unit 16 calculates the Hall-detection-delay advance angle correction value based on the Hall signals HU, HV, and HW and the cycle Ta for intermittently driving the Hall elements 2U, 2V, and 2W.

According to this configuration, it is possible to calculate the Hall-detection-delay advance angle correction value according to the rotational speed by the Hall signals HU, HV, and HW. That is, although the advance angle delay due to the delay of the zero-cross detection timing increases as the rotational speed increases, by calculating the Hall-detection-delay advance angle correction value according to the rotational speed, it is possible to appropriately correct a different advance angle delay depending on the rotational speed.

Further, in the present embodiment, the advance angle value generation unit 16 measures the time Tb of the electric angle 1 degrees based on the Hall signals HU, HV, and HW and calculates the electric angle corresponding to 1/2 of the cycle Ta for intermittently driving the Hall elements 2U, 2V, and 2W to calculate the Hall-detection-delay advance angle correction value.

According to this configuration, it is possible to appropriately correct the advance angle delay based on the maximum value of the advance angle delay caused by the delay of the zero-cross detection timing.

### Example 2

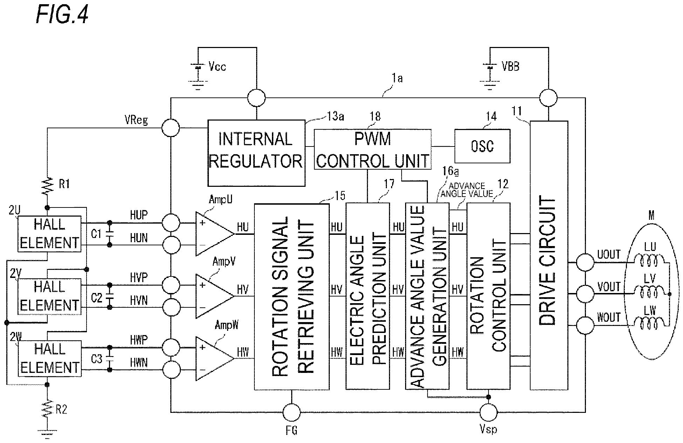

Referring to FIG. 4, a motor drive device 1a of a second embodiment is different from the motor drive device 1 in an internal regulator 13a, an advance angle value generation unit 16a, an electric angle prediction unit 17, and a PWM control unit 18.

Assuming that the 3-phase brushless DC motor M rotates at a constant rotational speed, based on the Hall signals HU, HV, and HW, the electric angle prediction unit 17 predicts the zero-cross timing of the Hall voltage which is output from each of the Hall elements 2U, 2V, and 2W. Further, the electric angle prediction unit 17 switches the drive switching signal Vd to the high level at the timing before the zero-cross of the Hall voltage, and switches the drive switching signal Vd to the low level when detecting the zero-cross of the Hall voltage. Further, a control signal Vsp from the outside which instructs the rotational speed is input to the electric angle prediction unit 17, and based on the zero-cross detection timing at which the zero-cross of the input Hall voltage is detected and the control signal Vsp, the timing before the zero-cross of the Hall voltage may be predicted. The rotation control unit 12 modulates the duty of the drive signal based on the instruction by the control signal Vsp and drives the drive circuit 11. The drive circuit 11 controls the rotational speed of the 3-phase brushless DC motor M based on the drive signal.

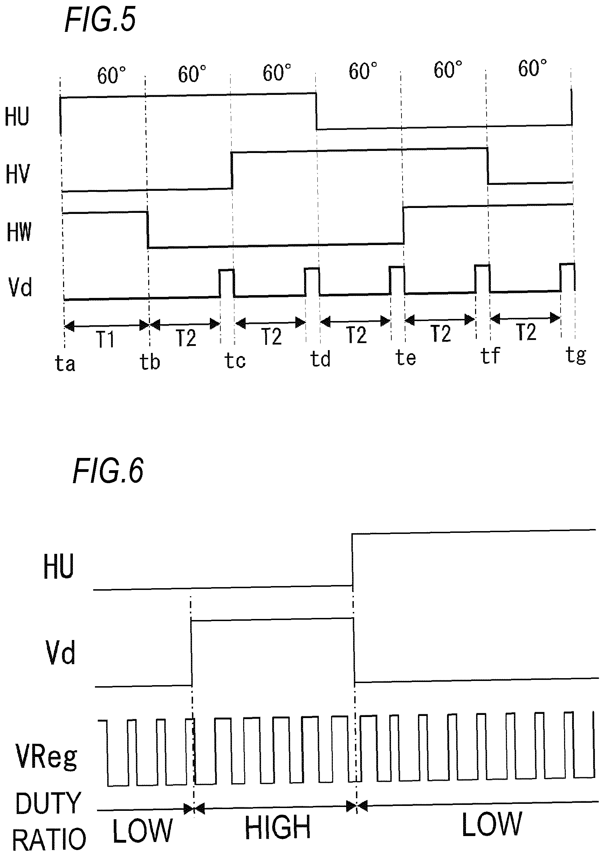

In FIG. 5, Hall signals HU, HV, and HW input to the electric angle prediction unit 17 are illustrated. The timing at which the high level and the low level are switched in the Hall signals HU, HV, and HW is the zero-cross detection timing at which the zero-cross of the Hall voltage is detected, and any of the Hall signals HU, HV, and HW switches between the high level and the low level at every electric angle of 60 degrees. First, by measuring the time between the zero-cross detection timings (for example, times ta to tb, times ta to td) by an internal clock, the electric angle prediction unit 17 calculates the Hall voltage zero-cross cycle T1, that is, a time T1, in which the 3-phase brushless DC motor rotates by an electric angle of 60 degrees.

Based on the calculated zero-cross cycle T1, the electric angle prediction unit 17 switches the drive switching signal Vd to the high level at the timing before the zero-cross cycle T1 has elapsed from the zero-cross detection timing. For example, as illustrated in FIG. 5, the electric angle prediction unit 17 calculates a driving switching time T2 (T2 = T1 * 50/60) that is 10 degrees before the zero-cross cycle T1 by an electric angle, and switches the drive switching signal Vd to the high level after the driving switching time T2 from the zero-cross detection timing. For example, when the number of poles of the 3-phase brushless DC motor M is eight and the rotational speed is 1000 rpm, the drive switching signal Vd is changed to high level after about 6.25 ms (7.5 ms * 50/60) from the zero-cross detection timing.

In the present embodiment, the timing of switching from the intermittent driving to the DC driving is set to 10 degrees before the electric angle of the predicted zero-cross timing. The value of the electric angle can be appropriately set in consideration of the mounting error of the Hall elements 2U, 2V, and 2W and the deviation of the zero-cross detection timing due to the change of the rotational speed based on the control signal Vsp.

A PWM control unit 18 generates a PWM (Pulse Width Modulation) signal having a cycle of a pulse output from the oscillator (OSC) 14 at regular intervals. Based on the PWM signal generated by the PWM control unit 18, the internal regulator 13a outputs the drive voltage VReg when the PWM signal is at the high level, and stops output of the drive voltage VReg when the PWM signal is at the low level. As a result, the Hall elements 2U, 2V, and 2W are intermittently driven at a cycle sufficiently shorter than the zero-cross cycle of the Hall voltage, based on the PWM signal generated by the PWM control unit 18.

The PWM control unit 18 changes the duty ratio of the PWM signal to be generated in accordance with the drive switching signal Vd output from the electric angle prediction unit 17. As illustrated in FIG. 6, the PWM control unit 18 increases the duty ratio of the PWM signal, when the drive switching signal Vd is at the high level, as compared with the case where the drive switching signal Vd is at the low level. Therefore, the period during which the output of the drive voltage VReg is stopped is shortened in the zero-cross preceding period from before the zero-cross of the Hall voltage until the zero-cross is detected.

The PWM signal generated by the PWM control unit 18 is also input to the advance angle value generation unit 16a. The advance angle value generation unit 16a calculates the Hall-detection-delay advance angle correction value by dividing the time during which the drive voltage VReg during the zero-cross preceding period is not applied, by the measured time Tb. During the zero-cross preceding period, as compared to the period other than the zero-cross preceding period, the time during which the drive voltage VReg is not applied is shortened. Therefore, the Hall-detection-delay advance angle correction value calculated by the advance angle value generation unit 16a also has a small value. Therefore, the error in detecting the zero-cross becomes small, and it is possible to more effectively suppress the degradation of the motor efficiency caused by the delay of the zero-cross detection timing due to the intermittent driving of the Hall elements 2U, 2V, and 2W.

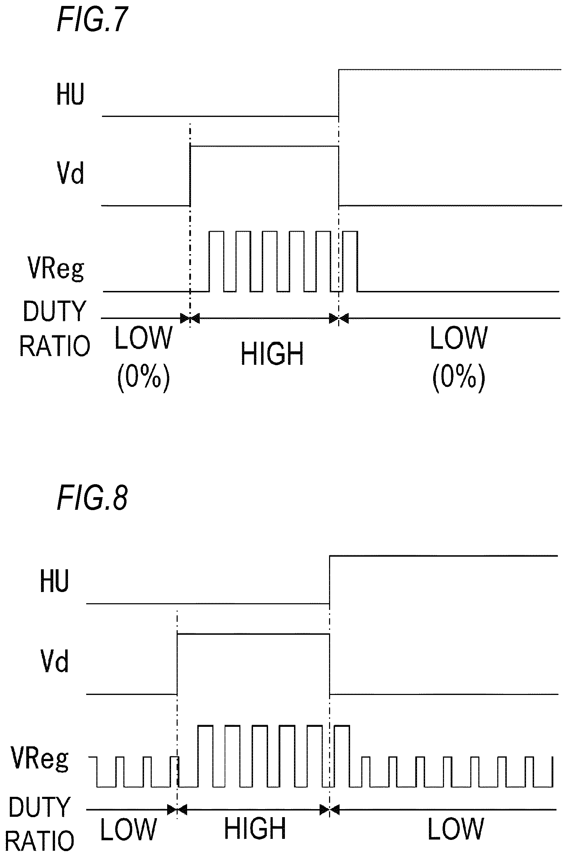

FIG. 7 illustrates an example in which the duty ratio of the PWM signal is 0% when the drive switching signal Vd is at a low level. In this case, during the period other than the zero-cross preceding period, the Hall elements 2U, 2V, and 2W are in a stopped state where the drive voltage VReg is not applied, and the power consumption can be further reduced.

Further, the drive switching signal Vd from the electric angle prediction unit 17 is input to the internal regulator 13a, and as illustrated in FIG. 8, during the period other than the zero-cross preceding period (the period during which the drive switching signal Vd is at a low level), the drive voltage may be lowered compared to the zero-cross preceding period (the period during which the drive switching signal Vd is at a high level). That is, when the drive voltage is lowered, since the output levels of the Hall signals HU, HV, and HW are lowered, there is a high risk of erroneous detection due to the influence of noise or the like. However, during the period other than the zero-cross preceding period, a little erroneous detection is allowed. Therefore, by lowering the drive voltage during a period other than the zero-cross preceding period, the power consumption can be further reduced.

As described above, in the present embodiment, a motor drive device 1 drives the 3-phase brushless DC motor M, in which Hall elements 2U, 2V, and 2W for detecting magnetic poles of a rotor and outputting a pair of Hall voltages having opposite polarities are disposed as a position detection unit detecting the position of the rotor, the motor drive device includes: an internal regulator 13a which functions as a Hall sensor power supply configured to intermittently output a drive voltage to the Hall elements 2U, 2V, and 2W to intermittently drive the Hall elements 2U, 2V, and 2W; a drive circuit 11 which generates and outputs an applied voltage to be applied to the drive windings LU, LV, and LW of the 3-phase brushless DC motor M; Hall amplifiers AmpU, AmpV, and AmpW which detect zero-cross detection timing at which zero-cross of the Hall voltage output from the Hall elements 2U, 2V, and 2W is detected; a rotation control unit 12 which grasps the rotational position of the rotor to drive the drive circuit 11 based on the Hall signals HU, HV, and HW; and an advance angle value generation unit 16a which generates the advance angle value taking account of the delay of the zero-cross detection timing caused by the intermittent driving of the Hall elements 2U, 2V, and 2W. Based on the prediction result of the electric angle prediction unit 17, the internal regulator 13a increases the duty ratio which intermittently outputs the drive voltage Vreg during the zero-cross preceding period until the zero-cross is detected from before zero-cross of the Hall voltage. The advance angle value generation unit 16a generates an advance angle value taking into consideration of the delay of the zero-cross detection timing caused by the intermittent driving of the Hall elements 2U, 2V, and 2W in the zero-cross preceding period. The rotation control unit 12 corrects the phase of the applied voltage output from the drive circuit 11 based on the advance angle value generated by the advance angle value generation unit 16a.

According to this configuration, the error at the time of detecting the zero-cross becomes small, and it is possible to more effectively suppress the degradation of the motor efficiency caused by the delay of the zero-cross detection timing due to the intermittent driving of the Hall elements 2U, 2V, and 2W.

Further, in the present embodiment, the internal regulator 13a stops the output of the drive voltage VReg to the Hall elements 2U, 2V, and 2W by setting the duty ratio to 0% in the period other than the zero-cross preceding period.

According to this configuration, it is possible to further reduce power consumption.

Furthermore, in the present embodiment, the internal regulator 13a lowers the drive voltage VReg in the period other than the zero-cross preceding period as compared with the zero-cross preceding period.

According to this configuration, it is possible to further reduce power consumption.

Furthermore, in the present embodiment, the electric angle prediction unit 17 measures the time between the zero-cross detection timings at which the zero-cross of the input Hall voltage is detected, and the electric angle prediction unit 17 predicts the timing before the zero-cross of the Hall voltage, based on the measurement result.

According to this configuration, it is possible to accurately predict the zero-cross timing by measuring the time between the zero-cross detection timings.

Further, in the present embodiment, the electric angle prediction unit 17 predicts the timing before the zero-cross of the Hall voltage, based on the zero-cross detection timing at which the zero-cross of the input Hall voltage is detected and the control signal Vsp from the outside instructing the rotational speed.

According to this configuration, it is possible to easily predict the zero-cross timing by the control signal Vsp.

The configurations, shapes, sizes, and arrangement relationships described in the above embodiments are only schematically illustrated to the extent that the present invention can be understood and implemented, and numerical values and composition (material) or the like of each component is merely an example. Accordingly, the present invention is not limited to the embodiments described above, but can be modified in various forms without departing from the scope of the technical idea described in the claims.

For example, the Hall elements 2U, 2V, and 2W as the Hall sensors may be replaced with Hall ICs, and the plurality of Hall sensors may be connected in series.

In addition, the Hall sensor power supply may be either a constant current source or a constant voltage source, and the resistors R1 and R2 may not be provided in accordance with the configuration of the Hall sensor power supply.

Also, in order to measure the time between the zero-cross detection timings, an external clock or charging and discharging of a capacitor or the like may be used without being limited to the built-in clock.

### Industrial Applicability

The present invention is applicable to a brushless DC motor drive device in which a Hall sensor is disposed as a position detection unit detecting the position of the rotor and which is used as a fan motor of an air conditioner, an air purifier, or the like.

### Reference Signs List

- 1, 1a:: Motor drive device
- 2U, 2V, 2W:: Hall element
- 11:: Drive circuit
- 12:: Rotation control unit
- 13, 13a:: Internal regulator
- 14:: Oscillator (OSC)
- 15:: Rotation signal retrieving unit
- 16, 16a:: Advance angle value generation unit
- 17:: Electric angle prediction unit
- 18:: PWM control unit
- AmpU, AmpV, AmpW:: Hall amplifier
- LU, LV, LW:: drive winding
- M:: 3-phase brushless DC motor
- VBB:: Main power source
- Vcc:: Control power source

## Claims

1. A motor drive device which drives a brushless DC motor in which a Hall sensor configured to detect magnetic poles of a rotor and output a pair of Hall voltages having opposite polarities is disposed as a position detection unit detecting the position of the rotor, the motor drive device comprising:
a Hall sensor power supply, which is configured to intermittently output a drive voltage to the Hall sensors to intermittently drive the Hall sensor;
a drive circuit, which generates and outputs an applied voltage to be applied to drive windings of the brushless DC motor;
a Hall amplifier, which detects a zero-cross detection timing at which zero-cross of the Hall voltage output from the Hall sensor is detected;
a rotation control unit, which grasps the rotational position of the rotor to drive the drive circuit based on a Hall signal generated by the Hall amplifier; and
an advance angle value generation unit, which generates an advance angle value taking account of the delay of the zero-cross detection timing caused by the intermittent driving of the Hall sensor,
wherein the rotation control unit corrects the phase of the applied voltage output from the drive circuit, based on the advance angle value generated by the advance angle value generation unit.

2. The motor drive device according to claim 1,
wherein the advance angle value generation unit calculates a Hall-detection-delay advance angle correction value for correcting an advance angle delay caused by the delay of the zero-cross detection timing, and generates the advance angle value to which the calculated Hall-detection-delay advance angle correction value is added.

3. The motor drive device according to claim 2,
wherein the advance angle value generation unit calculates the Hall-detection-delay advance angle correction value based on the Hall signals and a cycle of intermittently driving the Hall sensors.

4. The motor drive device according to claim 3,
wherein the advance angle value generation unit calculates the Hall-detection-delay advance angle correction value based on an electric angle corresponding to a time when the drive voltage becomes 0V.

5. A motor drive device which drives a brushless DC motor in which a Hall sensor configured to detect magnetic poles of a rotor and output a pair of Hall voltages having opposite polarities is disposed as a position detection unit detecting the position of the rotor, the motor drive device comprising:
a Hall sensor power supply configured to intermittently output a drive voltage to the Hall sensors to intermittently drive the Hall sensor;
a drive circuit which generates and outputs an applied voltage to be applied to drive windings of the brushless DC motor;
a Hall amplifier which detects a zero-cross detection timing at which zero-cross of the Hall voltage output from the Hall sensor is detected;
a rotation control unit which grasps the rotational position of the rotor to drive the drive circuit based on a Hall signal generated by the Hall amplifier;
an electric angle prediction unit which predicts a zero-cross timing of the input Hall voltage; and
an advance angle value generation unit which generates an advance angle value taking account of the delay of the zero-cross detection timing caused by the intermittent driving of the Hall sensor,
wherein the Hall sensor power supply increases a duty ratio, by which the drive voltage is intermittently output, during a zero-cross preceding period from before the zero-cross of the Hall voltage until the zero-cross is detected, as compared with a period other than the zero-cross preceding period, based on the prediction result of the electric angle prediction unit,
wherein the advance angle value generation unit generates the advance angle value taking into consideration of the delay of the zero-cross detection timing caused by the intermittent driving of the Hall sensor in the zero-cross preceding period, and
wherein the rotation control unit corrects the phase of the applied voltage output from the drive circuit, based on the advance angle value generated by the advance angle value generation unit.

6. The motor drive device according to claim 5,
wherein the Hall sensor power supply sets the duty ratio to 0 percent during the period other than the zero-cross preceding period, and stops output of the drive voltage to the Hall sensor.

7. The motor drive device according to claim 5 or 6,
wherein the Hall sensor power supply lowers the drive voltage during the period other than the zero-cross preceding period as compared with the zero-cross preceding period.

8. The motor drive device according to any one of claims 5 to 7,
wherein the electric angle prediction unit measures a time between the zero-cross detection timings at which the zero-cross of the input Hall voltage is detected and predicts a timing before the zero-cross of the Hall voltage based on the measurement result.

9. The motor drive device according to any one of claims 5 to 7,
wherein the electric angle prediction unit predicts the timing before the zero-cross of the Hall voltage, based on the zero-cross detection timing at which the zero-cross of the input Hall voltage is detected and a control signal from the outside instructing a rotational speed.
